# EUROPEAN PATENT APPLICATION

(11) **EP 4 749 355 A1**
(43) Date of publication of application: **27.05.2026**
(21) Application number: 25207033.9
(22) Date of filing: 06.10.2025
(51) Int. Cl.: G02F 1/1335, G02F 1/1347, G02F 1/1362

(54) **HIGH-EFFICIENCY LIQUID-CRYSTAL DISPLAYS WITH REFLECTIVE COLOR FILTERS**

(30) Priority: 25.11.2024 US 202418959250
(71) Applicant: Meta Platforms Technologies, LLC, Menlo Park, CA 94025 (US)
(72) Inventor: Lee, Yun-Han, Menlo Park (US); Zhu, Xinyu, Menlo Park (US); Jia, Zhang, Menlo Park (US); Li, Xiangtong, Menlo Park (US); Kitsomboonloha, Rungrot, Menlo Park (US); Wang, Yu-Jen, Menlo Park (US); Ye, Shenglin, Menlo Park (US)
(74) Representative: Murgitroyd & Company

(57) **Abstract**

A display device of the subject technology comprises a thin-film-transistor (TFT) layer formed on a substrate and a first layer formed over or under the TFT layer. The TFT layer reflects back unwanted color components of a light produced by a backlight unit (BLU). The display device further includes a second layer to selectively transmit desired colors of the light produced by the BLU to a liquid crystal (LC) layer. The reflected back unwanted color components are recycled to the BLU to reduce a portion of a loss of brightness due to absorption by the second layer.

## Description

### TECHNICAL FIELD

The present disclosure generally relates to liquid crystal displays (LCDs), and more particularly to high-efficiency LCDs with reflective color filters.

### BACKGROUND

LCD technology uses the light-modulating properties of liquid crystals combined with polarizers to present images. Unlike traditional displays, LCDs do not emit light directly. Instead, they use a backlight or reflector to produce images in color or monochrome. LCDs are widely used in various devices, including televisions, computer monitors, instrument panels, and portable devices like smartphones and digital cameras. LCDs are favored for their thin, lightweight design and low-power consumption compared to older technologies like cathode-ray tubes (CRTs). Each pixel in an LCD consists of a layer of liquid crystal molecules aligned between two transparent electrodes and two polarizing filters, which control the passage of light to create the desired image.

The efficiency of high-pixel-density LCD panels is very low. However, high pixel density is required for high resolution in displays such as mixed reality (MR) and/or virtual reality (VR) displays. For pancake-type MR (e.g., VR) compound lens, the lens transmittance can also be very low (e.g., about 20%). The resulting brightness may be as low as about 100 candelas per square meter (cds/m² (nits)). In order to reach a high dynamic range VR experience, this number needs to be improved (e.g., to a level between 100 to 200 nits). One major efficiency loss in LCDs results from the color filter that absorbs more than about 67% of the incoming light. Accordingly, color filters with higher overall brightness are desired.

### SUMMARY

According to a first aspect, there is provided a display device, comprising: a thin-film-transistor (TFT) layer formed on a substrate; a first layer configured to reflect back unwanted color components of a light produced by a backlight unit (BLU); and a second layer configured to selectively transmit desired colors of the light produced by the BLU to a liquid crystal (LC) layer, wherein the reflected back unwanted color components are recycled to the BLU to reduce a portion of a loss of brightness due to absorption by the second layer.

The first layer may be formed over the TFT layer. The first layer may comprise a reflective color filter (RCF). The second layer may comprise an absorptive color filter (CF).

The first layer may be formed under the TFT layer. The first layer may comprise a multilayer structure formed of a dielectric material and a metal.

The dielectric material may comprise silicon dioxide (SiO2) and niobium pentoxide (Nb2O5). The metal may comprise aluminum.

The TFT layer and the first layer may be disposed on a same side with respect to the LC layer.

The TFT layer may be configured to modulate an orientation of the LC layer.

The first layer may comprise a single-layer structure formed by a plasmonic coating process. The single-layer structure may alternatively or additionally be formed by a polarizing cholesteric (CLC) coating process. The single-layer structure may alternatively or additionally be formed by a polarization volume hologram (PVH) deposition process.

The first layer may comprise a two-layer structure formed by a non-polarizing CLC coating process.

According to a second aspect, there is provided an LCD, comprising: a TFT layer formed on a substrate; a reflective layer formed adjacent to the TFT layer; and an LC layer formed over the reflective layer, wherein: the reflective layer is configured to define color components to be passed to the LC layer and to reflect back unwanted color components of a light produced by a BLU.

The reflective layer may be formed over the TFT layer. The reflective layer may comprise an RCF multilayer structure formed of a dielectric material and a metal.

The dielectric material may comprise SiO2 and Nb2O5. The metal may comprise aluminum.

The reflective layer may be formed under the TFT layer. The reflective layer may comprise a single-layer structure formed by one of a plasmonic coating process, a polarizing CLC coating process and/or a PVH deposition process.

The reflective layer may comprise a two-layer structure formed by a non-polarizing CLC coating process.

The LCD may further comprise a planarization layer and a separation layer formed on top of the reflective layer.

The reflective layer may comprise a dielectric multilayer formed by a plasma vapor deposition (PVD) process. The reflective layer may have a thickness of less than about 1 mm.

According to a third aspect, there is provided a method, comprising: forming a TFT layer on a substrate; forming a reflective layer over the TFT layer; and forming an LC layer over the reflective layer, the reflective layer defining color components to be passed to the LC layer and reflecting back unwanted color components of a light produced by a BLU.

Forming the reflective layer may comprise depositing a multilayer by using a PVD process. The reflective layer may comprise an RCF layer.

Forming the reflective layer may comprise forming one of a single layer structure or a double layer structure. The single layer structure may be formed by one or more of a plasmonic coating process, a polarizing CLC coating process or a PVH deposition process. The double layer structure may be formed by a non-polarizing CLC coating process.

### BRIEF DESCRIPTION OF THE DRAWINGS

The accompanying drawings, which are included to provide further understanding and are incorporated in and constitute a part of this specification, illustrate disclosed examples and together with the description serve to explain the principles of the present disclosure.
FIGs. 1A and 1B are schematic diagrams illustrating LCD pixel implementations without and with a reflective color filter (RCF), in accordance with some aspects of the subject technology.
FIGs. 2A and 2B are schematic diagrams illustrating color-filter-on-array (COA) LCD pixel implementations without and with an RCF, in accordance with some aspects of the subject technology.
FIG. 3 is a table illustrating various options and features of integrating an RCF layer with an LCD pixel, in accordance with some aspects of the subject technology.
FIGs. 4A and 4B are schematic diagrams illustrating cross-sectional views of COA LCD pixel implementations with RCF and absorptive CF, in accordance with some aspects of the subject technology.
FIGs. 5A and 5B are schematic diagrams illustrating cross-sectional views of COA LCD pixel implementations with RCF and no absorptive CF, in accordance with some aspects of the subject technology.
FIG. 6 is a flow diagram illustrating an example of a method of forming a high-efficiency LCD with an RCF, in accordance with some aspects of the subject technology.

In one or more implementations, not all of the depicted components in each figure may be required, and one or more implementations may include additional components not shown in a figure. Variations in the arrangement and type of the components may be made without departing from the scope of the subject disclosure. Additional components, different components, or fewer components may be utilized within the scope of the subject disclosure.

### DETAILED DESCRIPTION

In the following detailed description, numerous specific details are set forth to provide a full understanding of the present disclosure. It will be apparent, however, to one ordinarily skilled in the art, that the examples of the present disclosure may be practiced without some of these specific details. In other instances, well-known structures and techniques have not been shown in detail so as not to obscure the disclosure.

In some aspects, the subject technology is directed to high-efficiency LCDs with RCFs. The RCFs of the subject disclosure can be implemented with and without absorptive CFs. In other words, the disclosed RCFs can replace the existing absorptive CFs or be used in addition to absorptive CFs. In an LCD, the RCFs can be implemented in either side of the absorptive CFs, for example, they can be layers deposited under or above the absorptive CF layers. The RCFs of the subject technology can reflect the majority of the wrong color back to the backlight unit (BLU) to be recycled. The RCFs of the subject technology can be realized in various optical structures, for example, in a multilayer deposition, and can be integrated with COA LCD systems. The COA LCD refers to a mosaic of tiny color filters placed over the pixels of the LCD.

The disclosed display system includes a layer of LC between polarizers for intensity modulation, with a layer of thin-film transistor (TFT) to modulate the LC orientation, and with a layer of CF for defining color. In some aspects, the CF and the TFT are on the same side with respect to the LC layer. In one or more aspects, the CF may consist of an absorptive layer or a reflective layer or both. In some aspects, the reflective layer may be created by a dielectric multilayer structure. In one or more aspects, the reflective layer may be created by multilayer and/or single layer structures consisting of both dielectric (e.g., SiO2, Nb2O5) and metallic layers (e.g., Al) (in a single layer). In some aspects, the reflective layer is deposited by physical vapor deposition (PVD) with subsequent planarization layer coating and chemical mechanical polish treatment.

In some aspects, the disclosed RCFs can be realized in a number of ways, each having their respective benefits and limitations. A multilayer realization can be performed in conventional fabrication facilities capable of dielectric coatings with a thickness of less than about 1mm. The realization of a single layer (e.g., with a thickness of less than about 1mm) can take place via plasmonics (the process of depositing metallic films with precise microstructures and optimized optical performance). However, the concern would be more light absorption by the layer and the need to identify mass-producible nanostructures.

Another single layer realization approach includes polarizing cholesteric (CLC) coatings (a coating made from cholesteric liquid crystals), which reflects one circular polarization (CP) and can have a thickness of about 5mm. The output light of this layer is circularly polarized, which is not appropriate as a linearly polarized light is needed before hitting the LC layer. The other single layer approach is polarization volume hologram (PVH), which can have a better recycling control and direction control, but still has the issues similar to the CLC approach. There is a two-layer realization approach, namely, non-polarizing CLC coating, which is a dual handed coating that reflects both CP components and can have a thickness of about 10mm.

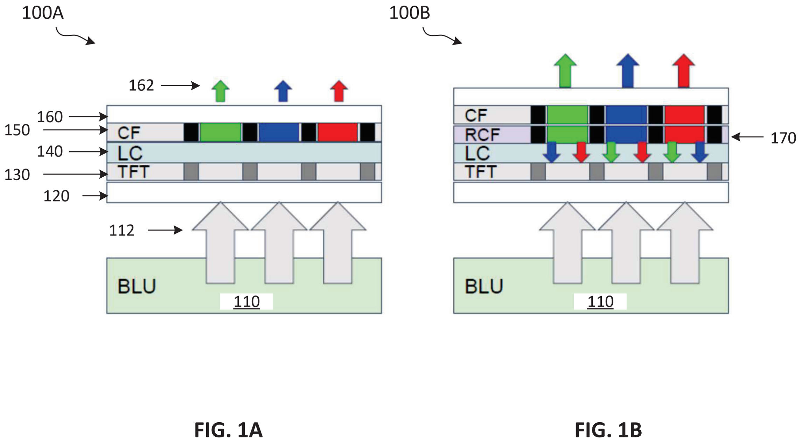

Turning now to the figures, FIGs. 1A and 1B are schematic diagrams illustrating LCD pixel implementations 100A and 100B without and with an RCF, in accordance with some aspects of the subject technology. The structures shown by the LCD pixel implementation 100A and 100B are representative of only one pixel. The LCD pixel implementation 100A includes a BLU 110, a substrate 120, a TFT layer 130, an LC layer 140, a CF layer 150 and a top layer 160 (e.g., glass). The BLU 110 produces backlight 112. The substrate 120 can be a transparent substitute such as glass, on which the other layers including the TFT layer 130 and other layers are formed. The TFT layer 130 consists of electronic circuitry including logic circuits that control the operations of pixels of the LC layer 140 and the CF layer 150. The TFT layer 130 generates an electric current that changes the orientation of the molecules of a pixel of the LC layer 140, which act as a switch that controls the amount of backlight 112 that passes through that pixel.

The CF layer 150 defines color of the light 162 (passed through the top layer 160) by allowing a specific color (e.g., a specific combination of red, blue and green colors) to pass through the CF layer 150. The CF layer 150 is also controlled by the TFT layer 130. One problem with the CF layer 150 is that it absorbs more than about 67% of the incoming light, which are unwanted colors (wrong). This results in a loss of efficiency and brightness. The subject technology mitigates this problem as discussed herein with respect to the LCD pixel implementation 100B.

The structure of the LCD pixel implementation 100B is similar to the structure of the LCD pixel implementation 100A, except for addition of the RCF layer 170 on top of the LC layer 140. The advantage of adding the RCF layer 170 is that it reflects the unwanted colors back to the BLU 110. The reflected back colors are recycled by the BLU 110, which results in a decreased loss of light and higher efficiency. In some implementations, the RCF layer 170 may be able to achieve the functionality of selecting the desired color as well, such that for cost saving purposes, the CF layer 150 can be disposed of.

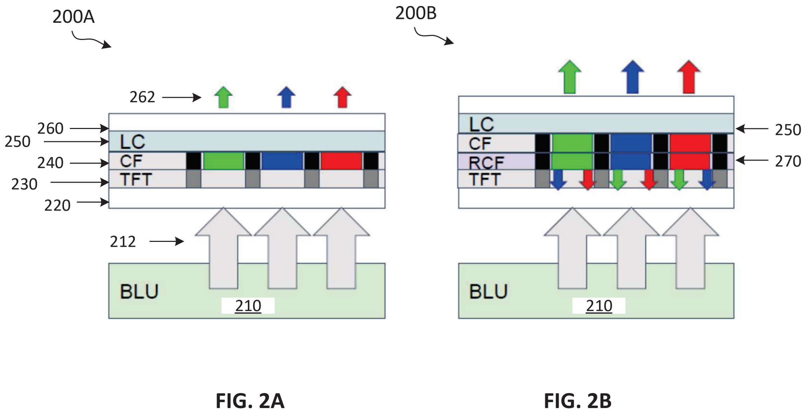

FIGs. 2A and 2B are schematic diagrams illustrating COA LCD pixel implementations 200A and 200B without and with an RCF, in accordance with some aspects of the subject technology. The COA LCD pixel implementation 200A includes a BLU 210, a substrate 220 (e.g., glass), a TFT layer 230, a CF layer 240, an LC layer 250, and a top layer 260 (e.g., glass), the structures and functionalities of which are similar to the structures and functionalities of their corresponding components in FIG. 1A. The difference between the implementations shown in FIG. 1A and 2A is that the positions of the LC and CF layers with respect to the TFT layers are changed. In other words, in FIG. 2A, the CF layer 240 is adjacent to the TFT layer 230 as compared to FIG. 1, where LC layer 140 is adjacent to the TFT layer 130.

The structure of the COA LCD pixel implementation 200B is similar to the structure of the COA LCD pixel implementation 200A, except for addition of the RCF layer 270 on top of the TFT layer 230. The advantage of adding the RCF layer 270 is that it reflects the unwanted colors back to the BLU 210, which produces the backlight 212. The reflected back colors are recycled by the BLU 210, which results in a decreased loss of light , higher efficiency and more brightness of the output light 262. In some implementations, the RCF layer 270 may be able to achieve the functionality of selecting the desired color as well, such that the CF layer 240 may be omitted from the structure, for example, for cost saving, without a substantial change in functionalities of the COA LCD.

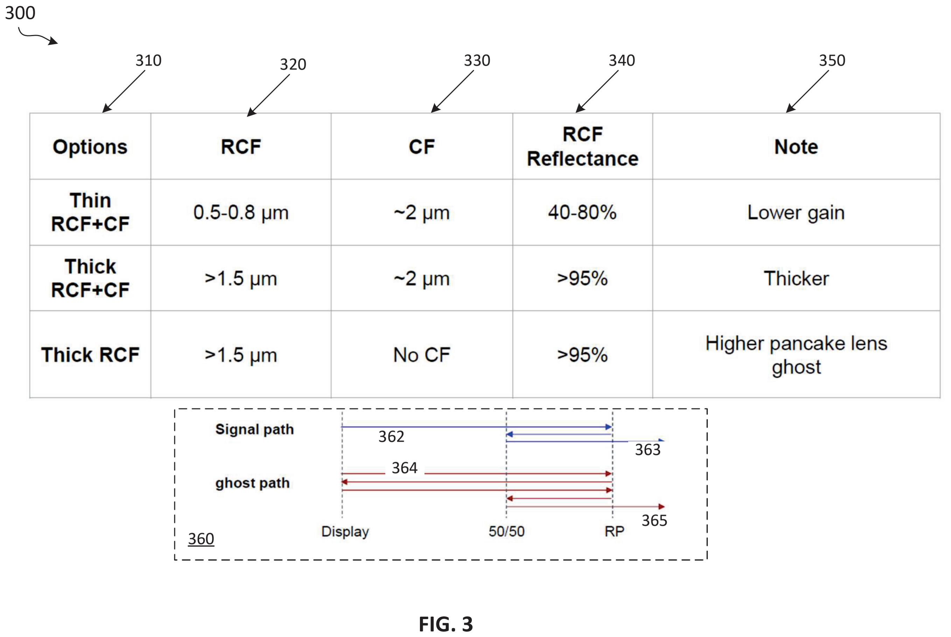

FIG. 3 is a table 300 illustrating various options and features of integrating an RCF layer with an LCD pixel, in accordance with some aspects of the subject technology. The table 300 includes columns 310, 320, 330, 340 and 350. Column 310 lists various options for implementation of the RCF filter. For example, the options include using a thin RCF plus CF, a thick RCF plus CF and a thick RCF.

Column 320 shows approximate thicknesses values of the RCF layer for the options shown in column 310, and column 330 indicates approximate thicknesses values of the CF layer for the options shown in column 310. Column 340 provides approximate reflectance values for the options shown in column 310. Column 350 provides notes on each option listed in column 310.

FIG. 3 also shows a diagram 360 showing signal and ghost paths between the display and the user's eye. In this diagram, the 50/50 represents a partial mirror and the last components are a reflective polarizer of a pancake lens. A large portion of the light from the display is the signal light 362, which is reflected back from the RP and the 50/50 mirror and as an image 363 seen by the user's eyes. A small portion (e.g., a few percent) of the light from the display is a portion 364 that is reflected back from the RP to the display and again reflected back to the RF due to the RCF layer in the display. This reflected light is again reflected by the RP to the 50/50 mirror and again is reflected back to the user's eyes as a ghost 365.

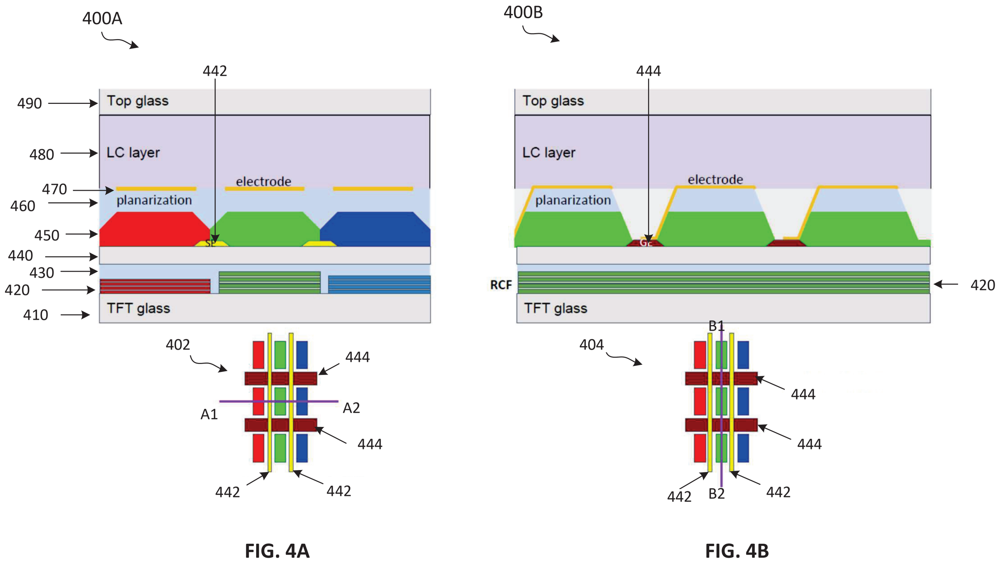

FIGs. 4A and 4B are schematic diagrams illustrating cross-sectional views 400A and 400B of a COA LCD pixel implementation with RCF and absorptive CF, in accordance with some aspects of the subject technology. FIG. 4A shows a horizontal cross-sectional view across a line A1-A2 (indicated in the top view 402). The COA LCD pixel implementation, as shown in the horizontal cross-sectional view 400A, includes a TFT glass layer 410, RCF layer 420, a first planarization layer 430, a separation layer 440, a CF layer 450, a second planarization layer 460, an electrode layer 470, an LC layer 480 and a top glass layer 490. Also embedded over the separation layer 440 is source electrode (SE) 442.

The TFT glass layer 410 represents a TFT layer formed on a glass substrate (e.g., 220 of FIG. 2A). The RCF layer 420 is a multilayer structure formed, for example, by chemical vapor deposition (CVD), physical vapor deposition (PVD) or other deposition processes. The CF layer 450 is the absorptive CF layer. The second planarization layer 460 is used to smooth the CF layer 450 for deposition of the electrode layer 470. The SE 442, also shown on the top views 402 and 404, form the source electrode of the transistors of the TFT layer.

FIG. 4B shows a vertical cross-sectional view across a line B1-B2 (indicated in the top view 404). The COA LCD pixel implementation, as shown in the vertical cross-sectional view 400B, is structurally similar to the COA LCD pixel implementation shown in FIG. 4A, except that the RCF layer 420 looks different because in this cross-sectional view only the middle portion of the RCF layer 420 is visible. Also embedded over the separation layer 440 is gate electrode (GE) 444. The GE 444, also shown on the top views 402 and 404, form the gate electrodes of the transistors of the TFT layer.

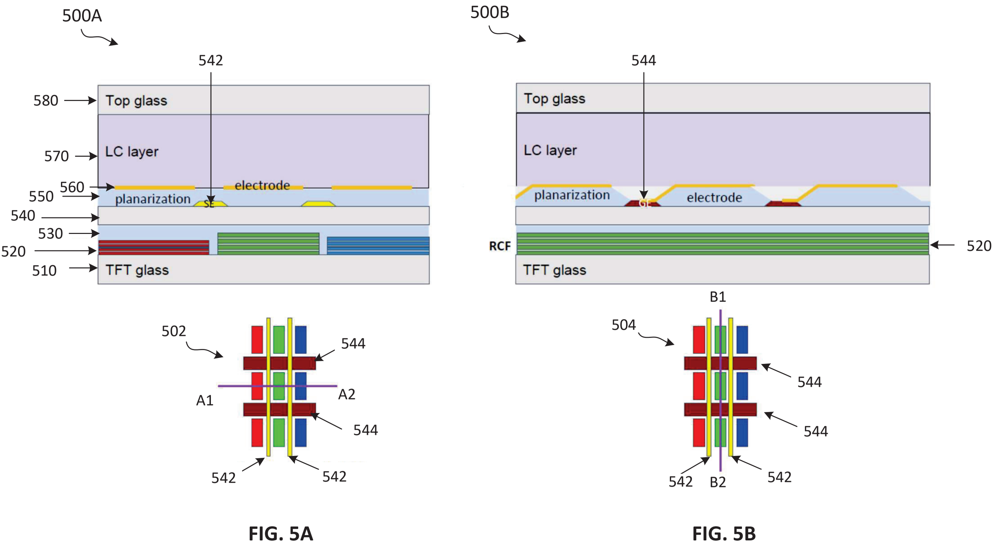

FIGs. 5A and 5B are schematic diagrams illustrating cross-sectional views of COA LCD pixel implementations with RCF and no absorptive CF, in accordance with some aspects of the subject technology. FIG. 5A shows a horizontal cross-sectional view across a line A1-A2 (indicated in the top view 502). The COA LCD pixel implementation, as shown in the horizontal cross-sectional view 500A, includes a TFT glass layer 510, RCF layer 520, a first planarization layer 530, a separation layer 540, a second planarization layer 550, an electrode layer 560, an LC layer 570 and a top glass layer 580, which are similar to the corresponding layers in the COA LCD pixel implementation, as shown in the horizontal cross-sectional view 400A. Also embedded over the separation layer 540 is SE 542.

The RCF layer 520 replaces the functionality of the absorptive CF layer, which is omitted from the implementation of FIG. 5A, while reflecting back the unwanted colors. This can result in decreased complexity and less production cost.

FIG. 5B shows a vertical cross-sectional view across a line B1-B2 (indicated in the top view 504). The COA LCD pixel implementation, as shown in the vertical cross-sectional view 500B, is structurally similar to the COA LCD pixel implementation shown in FIG. 5A, except that the RCF layer 520 looks different because in this cross-sectional view only the middle portion of the RCF layer 520 is visible. Also embedded over the separation layer 540 is GE 544. The GE 544, also shown on the top views 502 and 504, form the gate electrodes of the transistors of the TFT layer.

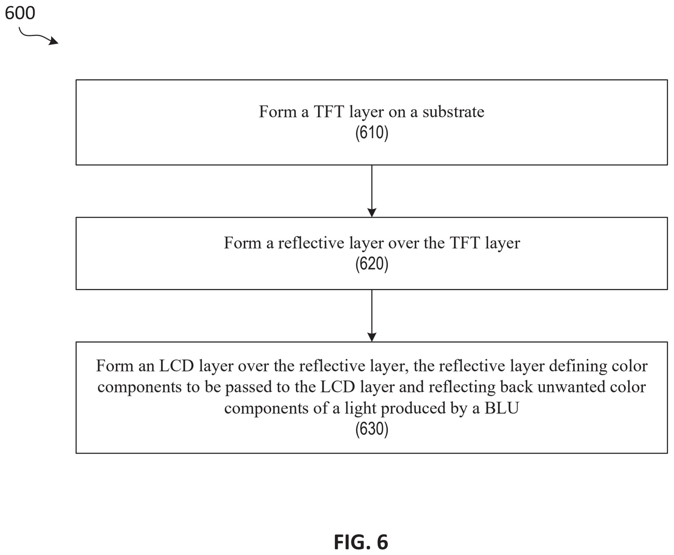

FIG. 6 is a flow diagram illustrating an example of a method 600 of forming a high-efficiency LCD with an RCF, in accordance with some aspects of the subject technology. The method 600 starts with process step 610, where a TFT layer (e.g., 230 of FIG. 2A) is formed on a substrate (e.g., 220 of FIG. 2A). In a next step 620, a reflective layer (e.g., 270 of FIG. 2B) is formed over the TFT layer. Finally in a step 630, an LC layer (e.g., 250 of FIG. 2B) is formed over the reflective layer. The reflective layer defines color components to be passed to the LC layer and reflects unwanted color components of a light produced by a BLU to the BLU (e.g., 210 of FIG. 2A).

An aspect of the subject technology is directed to a display device comprising a thin-film-transistor (TFT) layer formed on a substrate and a first layer formed over or under the TFT layer. The TFT layer reflects back unwanted color components of a light produced by a backlight unit (BLU). The display device further includes a second layer to selectively transmit desired colors of the light produced by the BLU to an LC layer. The reflected back unwanted color components are recycled to the BLU to reduce a portion of a loss of brightness due to absorption by the second layer.

In some implementations, the first layer comprises a reflective color filter (RCF) and the second layer comprises an absorptive color filter (CF).

In one or more implementations, the first layer comprises a multilayer structure formed of a dielectric material and a metal.

In some implementations, the dielectric material comprises silicon dioxide (SiO2) and niobium pentoxide (Nb2O5) and the metal comprises aluminum.

In one or more implementations, the TFT layer and the first layer are on a same side with respect to the LC layer.

In some implementations, the TFT layer is configured to modulate an orientation of the LC layer.

In one or more implementations, the first layer comprises a single-layer structure formed by a plasmonic coating process.

In some implementations, the first layer comprises a single-layer structure formed by a polarizing cholesteric (CLC) coating process.

In one or more implementations, the first layer comprises a single-layer structure formed by a polarization volume hologram (PVH) deposition process.

In some implementations, the first layer comprises a two-layer structure formed by a non-polarizing CLC coating process.

Another aspect of the subject technology is directed to an LCD including a TFT layer formed on a substrate, a reflective layer formed adjacent to the TFT layer, and an LC layer formed over the reflective layer. The reflective layer is used to define color components to be passed to the LC layer and to reflect back unwanted color components of a light produced by a BLU.

In some implementations, the reflective layer is formed over or under the TFT layer and comprises an RCF multilayer structure formed of a dielectric material and a metal.

In one or more implementations, the dielectric material comprises SiO2 and Nb2O5 and the metal comprises aluminum.

In some implementations, the reflective layer comprises a single-layer structure formed by one of a plasmonic coating process, a polarizing CLC coating process or a PVH deposition process.

In one or more implementations, the reflective layer comprises a two-layer structure formed by a non-polarizing CLC coating process.

In some implementations, the LCD further comprises a planarization layer and a separation layer formed on top of the reflective layer.

Yet another aspect of the subject technology directed to a method of the subject technology includes forming a TFT layer on a substrate, forming a reflective layer over the TFT layer, and forming an LC layer over the reflective layer. The reflective layer defines color components to be passed to the LC layer and reflects back unwanted color components of a light produced by a BLU.

In one or more implementations, forming the reflective layer comprises depositing a multilayer by using a PVD process, wherein the reflective layer comprises an RCF layer.

In some implementations, forming the reflective layer comprises forming one of a single layer structure or a double layer structure, the single layer structure formed by one of a plasmonic coating process, a polarizing CLC coating process or a PVH deposition process, and the double layer structure formed by a non-polarizing CLC coating process.

In some implementations, the word "exemplary" is used herein to mean "serving as an example, instance, or illustration." Any embodiment described herein as "exemplary" is not necessarily to be construed as preferred or advantageous over other embodiments. Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

A reference to an element in the singular is not intended to mean "one and only one" unless specifically stated, but rather "one or more." Pronouns in the masculine (e.g., his) include the feminine and neuter gender (e.g., her and its) and vice versa. The term "some" refers to one or more. Underlined and/or italicized headings and subheadings are used for convenience only, do not limit the subject technology, and are not referred to in connection with the interpretation of the description of the subject technology. Relational terms such as first and second and the like may be used to distinguish one entity or action from another without necessarily requiring or implying any actual such relationship or order between such entities or actions. All structural and functional equivalents to the elements of the various configurations described throughout this disclosure that are known or later come to be known to those of ordinary skill in the art are expressly incorporated herein by reference and intended to be encompassed by the subject technology. Moreover, nothing disclosed herein is intended to be dedicated to the public, regardless of whether such disclosure is explicitly recited in the above description. No clause element is to be construed under the provisions of 35 U.S.C. §112, sixth paragraph, unless the element is expressly recited using the phrase "means for" or, in the case of a method clause, the element is recited using the phrase "step for."

While this specification contains many specifics, these should not be construed as limitations on the scope of what may be described, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially described as such, one or more features from a described combination can in some cases be excised from the combination, and the described combination may be directed to a sub-combination or variation of a sub-combination.

The subject matter of this specification has been described in terms of particular aspects, but other aspects can be implemented and are within the scope of the following clauses. For example, while operations are depicted in the drawings in a particular order, this should not be understood as requiring that such operations be performed in the particular order shown or in sequential order, or that all illustrated operations be performed, to achieve desirable results. The actions recited in the clauses can be performed in a different order and still achieve desirable results. As one example, the processes depicted in the accompanying figures do not necessarily require the particular order shown, or sequential order, to achieve desirable results. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products.

The title, background, brief description of the drawings, abstract, and drawings are hereby incorporated into the disclosure and are provided as illustrative examples of the disclosure, not as restrictive descriptions. It is submitted with the understanding that they will not be used to limit the scope or meaning of the clauses. In addition, in the detailed description, it can be seen that the description provides illustrative examples, and the various features are grouped together in various implementations for the purpose of streamlining the disclosure. The method of disclosure is not to be interpreted as reflecting an intention that the described subject matter requires more features than are expressly recited in each clause. Rather, as the clauses reflect, inventive subject matter lies in less than all features of a single disclosed configuration or operation. The clauses are hereby incorporated into the detailed description, with each clause standing on its own as a separately described subject matter.

Aspects of the subject matter described in this disclosure can be implemented to realize one or more of the following potential advantages. The described techniques may be implemented to support a range of benefits and significant advantages of the disclosed eye tracking system. It should be noted that the subject technology enables fabrication of a depth-sensing apparatus that is a fully solid-state device with small size, low power, and low cost.

As used herein, the phrase "at least one of" preceding a series of items, with the terms "and" or "or" to separate any of the items, modifies the list as a whole, rather than each member of the list (i.e., each item).

To the extent that the term "include," "have," or the like is used in the description or the claims, such term is intended to be inclusive in a manner similar to the term "comprise" as "comprise" is interpreted when employed as a transitional word in a claim.

A reference to an element in the singular is not intended to mean "one and only one" unless specifically stated, but rather "one or more." All structural and functional equivalents to the elements of the various configurations described throughout this disclosure that are known or later come to be known to those of ordinary skill in the art are expressly incorporated herein by reference and intended to be encompassed by the subject technology. Moreover, nothing disclosed herein is intended to be dedicated to the public regardless of whether such disclosure is explicitly recited in the above description.

While this specification contains many specifics, these should not be construed as limitations on the scope of what may be claimed, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

## Claims

1. A display device, comprising:
a thin-film-transistor, TFT, layer formed on a substrate;
a first layer configured to reflect back unwanted color components of a light produced by a backlight unit, BLU; and
a second layer configured to selectively transmit desired colors of the light produced by the BLU to a liquid crystal, LC, layer,
wherein the reflected back unwanted color components are recycled to the BLU to reduce a portion of a loss of brightness due to absorption by the second layer.

2. The display device of claim 1, wherein the first layer is formed over the TFT layer, and wherein the first layer comprises a reflective color filter, RCF, and the second layer comprises an absorptive color filter, CF.

3. The display device of claim 1, wherein the first layer is formed under the TFT layer, and wherein the first layer comprises a multilayer structure formed of a dielectric material and a metal;
preferably wherein the dielectric material comprises silicon dioxide, SiO₂, and niobium pentoxide, Nb₂O₅, and the metal comprises aluminum.

4. The display device of any preceding claim, wherein the TFT layer and the first layer are disposed on a same side with respect to the LC layer.

5. The display device of any preceding claim, wherein the TFT layer is configured to modulate an orientation of the LC layer.

6. The display device of any preceding claim, wherein the first layer comprises a single-layer structure formed by a plasmonic coating process, a polarizing cholesteric, CLC, coating process, or a polarization volume hologram, PVH, deposition process.

7. The display device of any preceding claim, wherein the first layer comprises a two-layer structure formed by a non-polarizing CLC coating process.

8. An LCD, comprising:
a TFT layer formed on a substrate;
a reflective layer formed adjacent to the TFT layer; and
an LC layer formed over the reflective layer,
wherein:
the reflective layer is configured to define color components to be passed to the LC layer and to reflect back unwanted color components of a light produced by a BLU.

9. The LCD of claim 8, wherein the reflective layer is formed over the TFT layer, and wherein the reflective layer comprises an RCF multilayer structure formed of a dielectric material and a metal;
preferably wherein the dielectric material comprises SiO₂ and Nb₂O₅ and the metal comprises aluminum.

10. The LCD of claim 8, wherein the reflective layer is formed under the TFT layer, and wherein the reflective layer comprises a single-layer structure formed by one of a plasmonic coating process, a polarizing CLC coating process or a PVH deposition process.

11. The LCD of any of claims 8 to 10, wherein the reflective layer comprises a two-layer structure formed by a non-polarizing CLC coating process.

12. The LCD of any of claims 8 to 11, further comprising a planarization layer and a separation layer formed on top of the reflective layer.

13. The LCD of any of claims 8 to 12, wherein the reflective layer comprises a dielectric multilayer formed by a plasma vapor deposition, PVD, process and has a thickness of less than about 1 mm.

14. A method, comprising:
forming a TFT layer on a substrate;
forming a reflective layer over the TFT layer; and
forming an LC layer over the reflective layer, the reflective layer defining color components to be
passed to the LC layer and reflecting back unwanted color components of a light produced by a BLU.

15. The method of claim 14, wherein forming the reflective layer comprises depositing a multilayer by using a PVD process, wherein the reflective layer comprises an RCF layer; preferably wherein forming the reflective layer comprises forming one of a single layer structure or a double layer structure,
wherein:
the single layer structure is formed by one of a plasmonic coating process, a polarizing CLC coating process or a PVH deposition process, and
the double layer structure is formed by a non-polarizing CLC coating process.
